# EUROPÄISCHE PATENTSCHRIFT

(11) **EP 3 499 693 B1**
(45) Veröffentlichungstag und Bekanntmachung des Hinweises auf die Patenterteilung: **28.07.2021**
(21) Anmeldenummer: 18210317.6
(22) Anmeldetag: 05.12.2018
(51) Int. Cl.: H02K 23/66, H02K 13/10, H02K 5/14, H02K 5/22, H02K 11/215, H02K 11/25, H02K 11/26

(54) **KOMMUTATORMOTOR UND BAUREIHE VON KOMMUTATORMOTOREN**
COMMUTATOR MOTOR AND SERIES OF COMMUTATOR MOTORS
MOTEUR À COLLECTEUR ET SÉRIE DE MOTEURS À COLLECTEUR

(30) Priorität: 18.12.2017 DE 102017223061
(43) Veröffentlichungstag der Anmeldung: 19.06.2019
(73) Patentinhaber: Bühler Motor GmbH, 90459 Nürnberg (DE)
(72) Erfinder: AHRENS, Matthias, 90455 Nürnberg (DE); BERNREUTHER, Georg, 90449 Nürnberg (DE); RICHTER, Olaf, 90547 Stein (DE); SCHEER, Arnold, 04275 Leipzig (DE); Schaller, Günter, 92363 Breitenbrunn (DE)

(56) Entgegenhaltungen:
- EP-A1- 0 489 940
- WO-A1-01/51883
- DE-A1- 4 326 391
- DE-A1- 19 521 395
- DE-A1- 19 739 682
- DE-A1-102006 029 052
- DE-A1-102010 063 922
- DE-A1-102011 056 827
- DE-A1-102016 101 963
- JP-U- S59 126 599
- KR-U- 20100 011 259
- US-A1- 2017 149 312
- COEY J M D ED - RIVAS JOSÉ ET AL: "Permanent magnet applications", JOURNAL OF MAGNETISM AND MAGNETIC MATERIALS, ELSEVIER, AMSTERDAM, NL, Bd. 248, Nr. 3, 1. August 2002 (2002-08-01), Seiten 441-456, XP004381285, ISSN: 0304-8853, DOI: 10.1016/S0304-8853(02)00335-9

## Beschreibung

Die Erfindung betrifft einen Kommutatormotor (1) mit einem Gehäuse (2), einem eine Wicklung (13), einen Kommutator (20) und ein magnetisches Polrad (8) tragenden und um eine Rotorachse (21) drehbar gelagerten Rotor (3), einem Permanentmagnetstator (4), einer im Wesentlichen rechtwinklig zur Rotorachse (21) angeordneten Bürstentragplatte (5) mit Bürsten (6), welche mit dem Kommutator (20) in Kontakt stehen, einem innerhalb des Gehäuses (2) angeordneten Encoder, bestehend aus einem Magnetfeldsensor (7) und dem Polrad (8), wobei die Bürsten (6) axial auf einer ersten Seite einer Trennwand (22) der Bürstentragplatte (5) angeordnet sind und der Magnetfeldsensor (7) axial auf einer zweiten gegenüberliegenden Seite der Bürstentragplatte (5) auf einer Leiterplatte (9) angeordnet und befestigt ist.

Bei vielen Anwendungen ist es erforderlich Elektromotoren mit Encodern auszustatten. Die Auflösung kann zum Beispiel bis zu 2048 Impulsen pro Umdrehung betragen. Häufig soll auch eine Drehrichtungserkennung vorhanden sein. Hochauflösende Encoder sind oft optische Encoder, die außerhalb des Motorgehäuses an einem Ausgang des Motors angeordnet sind. Dies erhöht den axialen Bauraum und schränkt die Nutzungsmöglichkeiten des Elektromotors ein. Beispielsweise ist es schwierig z. B. eine Motorbremse, ein Lüfterrad oder dgl. neben einem anzutreibenden Getriebe am Elektromotor anzubauen. Bei Kommutatormotoren sind in der Regel Kohlebürsten im Einsatz, deren Abrieb optische Encoder bei Einbau im Motor unbrauchbar machen kann. Da der Abrieb aus leitenden Partikeln besteht, können diese Kurzschlüsse auf Leiterplatten hervorrufen.

Aus der DE 10 2014 007 242 A1 ist ein Kommutatormotor bekannt, bei dem ein Magnetfeldsensor auf einer Leiterplatte und diese auf einer Bürstentragplatte angeordnet ist. Die Leiterplatte ist relativ ungeschützt dem Kohleabrieb und einer thermischen Beeinträchtigung durch das unvermeidliche Bürstenfeuer ausgesetzt, so dass Kurzschlüsse nicht auszuschließen sind.

Aus der EP 0 489 940 A1 ist ein Kommutatormotor bekannt, bei welchem eine Bürstentragplatte und eine axial zu diesem versetzt angeordnete Leiterplatte mit Magnetfeldsensoren vorhanden sind. Die Bürstentragplatte trägt radial bewegliche Bürsten, die mit einem Kommutator zusammenwirken. Die Magnetfeldsensoren wirken mit einem Magnetpolrad zusammen. Der Kommutator und die Magnetfeldsensoren sind auf einer Motorwelle befestigt.

Aus der DE 43 26 391 A1 ist ein Kommutatormotor mit einem Magnetsensor bekannt, der in einer Tasche eines Lagerschilds angeordnet ist und mit einem auf einer Rotorwelle befestigten Polrad zusammenwirkt.

Aus der DE 10 2011 056 827 A1 ist ein gattungsgemäßer Kommutatormotor bekannt, bei welchem ein Magnetfeldsensor auf einer Leiterplatte befestigt ist. Die Leiterplatte ist in Aufnahmeschächte einer Bürstentragplatte achsparallel eingeschoben. Auf der gegenüberliegenden Seite der Bürstentragplatte sind Kohlebürsten radial beweglich angeordnet. Der Magnetfeldsensor wirkt mit einem Polrad auf der Rotorwelle zusammen. Da die Bürsten axial auf einer ersten Seite der Bürstentragplatte angeordnet sind und der Magnetfeldsensor axial auf einer zweiten gegenüberliegenden Seite der Bürstentragplatte angeordnet ist, wird der Magnetfeldsensor und die Sensorleiterplatte vor dem Kohleabrieb abgeschirmt. Kohlestaub kann daher nicht zu Kurzschlüssen führen. Zusätzlich wirkt die Bürstentragplatte als Abschirmung vor dem Bürstenfeuer und deren mögliche thermische Beeinträchtigung des Magnetfeldsensors. Die Bürstentragplatte weist einen für das Polrad zu engen Wellendurchgang auf, so dass dieses erst nachträglich montierbar ist, wobei Montagefehler möglich sind. Da der Magnetfeldsensor auf einer Leiterplatte angeordnet ist, können weitere Bauteile, die für den Betrieb des Magnetfeldsensors notwendig sind, auf einfache Weise mit diesem zu einer Baugruppe vereinigt werden. Zudem ist die Montage und Kontaktierung des Magnetfeldsensors auf diese Weise vereinfacht.

Aufgabe der Erfindung ist es bei einem gattungsgemäßen Kommutator für einen möglichst zuverlässigen Betrieb mit minimierter Gefahr von Kurzschlüssen zu sorgen, wobei der Kommutatormotor möglichst vielseitig einsetzbar ist. Weiter ist es Aufgabe der Erfindung eine Baureihe von Kommutatormotoren bereitzustellen, welche skalierbare Motordurchmesser von ca. 40mm, ca. 50mm, ca. 60mm und ca. 80mm mit dem gleichen Konzept und gleichen Fertigungsabläufen erlaubt. Weiter sollen einfache, gut beherrschbare Fertigungsprozesse einsetzbar sein, die vorzugsweise automatisierbar sind. Nach Möglichkeit sollen beide Wellenenden frei bleiben.

Diese Aufgabe wird erfindungsgemäß durch die Merkmale der Ansprüche 1 und 16 gelöst. Um das Polrad (8) nicht nachträglich monieren zu müssen, weist die Trennwand (22) eine ausreichend große Durchgangsöffnung auf. Hierdurch besteht aber die Gefahr, dass ein Teil des Kohleabriebs diese Öffnung passieren kann. Dieser Effekt wird erfindungsgemäß dadurch kompensiert, dass die Bürstentragplatte (5) eine im Wesentlichen konzentrisch um eine Motorachse angeordnete Ringwand (10) aufweist, der Magnetfeldsensor (7) in einer Ausnehmung der Ringwand (10) und die Leiterplatte im Wesentlichen radial außerhalb der Ringwand (10) angeordnet ist. Dadurch ist die Leiterplatte weitgehend vor Kohleabrieb geschützt.

Weiterbildungen der Erfindung werden in den Unteransprüchen dargestellt. Da auch die Wicklung thermisch auf den Magnetfeldsensor (7) einwirken kann ist dieser axial auf einer der Wicklung (13) abgewandten Seite der Bürstentragplatte (5) angeordnet.

Da der Magnetfeldsensor (7) vorzugsweise radial gegenüber dem Polrad angeordnet werden soll, ist es sinnvoll die Leiterplatte (9) parallel zu der Rotorachse (21) ausgerichtet anzuordnen. Auf diese Weise lassen sich auch einfach oberflächenmontierte Bauteile verwenden.

Um die Montage zu vereinfachen, wird die Leiterplatte (9) in Aufnahmen (12) der Bürstentragplatte (5) achsparallel eingeschoben. Hierdurch stimmt die Montagerichtung mit derjenigen für sonstige auf der Bürstentragplatte zu montierende Bauteile überein. Die Aufnahmen sind so gestaltet, dass die Leiterplatte (9) auf Anschlag eingesetzt wird und kein Nachjustieren notwendig ist.

Eine noch bessere Abschirmung vor Kohleabrieb und Bürstenfeuer, insbesondere der Leiterplatte (9), wird, erfindungsgemäß, dadurch erreicht, dass die Bürstentragplatte (5) eine im Wesentlichen konzentrisch um eine Motorachse angeordnete Ringwand (10) aufweist, der Magnetfeldsensor (7) in einer Ausnehmung der Ringwand (10) und die Leiterplatte im Wesentlichen radial außerhalb der Ringwand angeordnet ist. Die Ausnehmung sollte dabei so dimensioniert sein, dass der Magnetfeldsensor problemlos montiert werden kann, aber so wenig Spielraum wie möglich zwischen Magnetfeldsensor und Ringwand (10) verbleibt, welche die abschirmende Wirkung der Ringwand (10) abschwächt.

Nach einer Weiterbildung der Erfindung ist auf der Leiterplatte (9) ein Überspannungsschutz mit einem Nominalwert für die Spannungssignale von 3,7V, 5V, 12V, 24V, 40V oder 48V vorgesehen.

Außerdem ist es optional vorgesehen, die Leiterplatte mit einem Spannungsregler auszurüsten, der die Ausgangssignale mit einer Spannung 3,7V, 5V, 12V, 40V oder 48V ausgibt.

Oft ist auch eine Temperaturüberwachung nötig, deshalb kann die Leiterplatte auch mit einem Temperatursensor versehen sein.

Um die Leiterplatte (9) mit Spannung und Steuersignalen zu versorgen hat die Leiterplatte (9) eine Klemme, einen Stecker (17) mit einer Stiftleiste (23) oder Press-Fit Pins.

Versorgungsleitungen (Zuleitungen) enden in einer Kontaktleiste (31), welche in die Stiftleiste (23) einrastet und somit für eine Zugentlastung sorgt.

Alternativ ist es auch denkbar, zur Kontaktierung Kontakte mit federnden Zungen zu verwenden, die auf die Seitenkanten der Leiterplatte aufgeschoben werden.

Vorteilhafterweise ist die Steckrichtung des Steckers (17) achsparallel. Dadurch sind auch die Versorgungsleitungen in der Hauptmontagerichtung montierbar.

Der Lagerschild (14) weist eine Durchgangsöffnung (18) auf, welche eine Dichtungstülle (19) und die Versorgungsleitungen (16) und/oder die Steuerleitungen (15) aufnimmt. Die Dichtungstülle füllt den Raum zwischen den Versorgungsleitungen (16) und/oder den Steuerleitungen (15) aus und dichtet den Kommutatormotor ab.

Nach einer Weiterbildung der Erfindung sind die Versorgungsleitungen (16) und/oder die Steuerleitungen (15) mit einer Dichtmasse umspritzt, umgossen oder auf andere Weise umhüllt, welche die Dichtungstülle bildet. Dadurch kann eine spritzwasserdichte Anordnung hergestellt werden.

Im Übrigen ist vorgesehen, dass der Magnetfeldsensor (7) ein Hallsensor mit analogem oder digitalem Ausgang ist und das Polrad (8) zwischen zwei und dreißig Polpaare aufweist.

Damit auch höhere Auflösungen realisierbar sind, ist alternativ vorgesehen, dass ein Hallsensor-Array oder ein Sensor auf Grundlage des magnetoresistiven Effekts, wie GMR-Sensor, AMR-Sensor, CMR-Sensor, TMR-Sensor als Magnetfeldsensor (7) verwendet wird.

Besondere Vorteile werden dadurch erzielt, dass die Leiterplatte eine programmierbare Steuerung aufweist, wobei durch eine Programmierung eine Impulszahl pro Umdrehung, und/oder eine Drehrichtungserkennung und/oder eine Indexierung festlegbar ist. Die Programmierung erfolgt vorzugsweise nach der Montage des Motors über die Steuerleitungen (15).

Die Erfindung wird weiter durch eine Baureihe von Motoren, umfassend mehrere Kommutatormotoren gemäß Anspruch 16 gelöst. Es ist vorgesehen, dass sich die einzelnen Kommutatormotoren durch unterschiedliche Motordurchmesser und/oder Motorlängen und/oder Ausstattungsvarianten unterscheiden, wobei die Ausstattungsvarianten folgende Ausstattungsmerkmale aufweisen: die Bürstentragplatte (5), den Encoder, einer Leiterplatte und Steuerleitungen (15). Durch Variation und Kombination dieser Merkmale lässt sich eine Vielzahl unterschiedlicher Kommutatormotoren bereitstellen, die für unterschiedlichste Anforderungen gerüstet sind.

Je nach gewünschter Auflösung kann der Encoder in einer Ausstattungsvariante einen GMR-Sensor oder ein Hallsensor-Array und ein zweipoliges Polrad aufweisen. Mit dieser Anordnung lassen sich bis zu 2048 Impulse pro Umdrehung erzeugen.

Falls eine geringere Auflösung bis 60 Impulse ausreicht kann in einer weiteren Ausstattungsvariante einen Hallsensor und ein mehrpoliges Polrad mit einer Polpaarzahl >= 1 und <= 30 verwendet werden.

Häufig ist es wirtschaftlicher, Kommutatormotoren mit gleicher Bauweise in großen Stückzahlen herzustellen und Ausführungsvarianten allein durch unterschiedliche Programmierung zu erreichen. Daher ist in einer Ausstattungsvariante vorgesehen, dass der Encoder mit oder ohne einer programmierbaren elektronischen Schaltung ausgerüstet ist.

Je nach Anforderungen an die Auswertung kann es sinnvoll sein in einer Ausstattungsvariante einen Encoder mit einem Magnetfeldsensor zu verwenden, welcher einen digitalen oder in einem anderen Fall einen analogen Ausgang aufweist.

In vielen Anwendungen mit erhöhten Anforderungen sind Leiterplatten mit integriertem Überspannungsschutz gefordert. In einer Ausstattungsvariante ist eine Leiterplatte mit einem Überspannungsschutz ausgerüstet, alternativ zu einer Leiterplatte ohne Überlastschutz.

Vielfach ist es sinnvoll die Spannung zu regeln, deshalb ist in einer Ausstattungsvariante eine Leiterplatte mit einem Spannungsregler ausgerüstet, alternativ zu einer Leiterplatte ohne Spannungsregler.

Auch die Temperatur ist häufig zu überwachen, in einer Ausstattungsvariante ist daher eine Leiterplatte mit einem Temperatursensor ausgerüstet, alternativ zu einer Leiterplatte ohne Temperatursensor.

Bei komplexen Anwendungen kann gegenüber einfacheren Anwendungen eine erhöhte Anzahl an Steuerleitungen erforderlich sein, daher ist in einer Ausstattungsvariante eine Leiterplatte (9) mit fünf oder acht Steuerleitungen vorgesehen. Dabei sind jeweils zwei Steuerleitungen für die Versorgung, zwei für jeweils einen Kanal, eine für eine Indexierung. Bei acht Steuerleitungen sind die Kanalleitungen und die Indexierungsleitung jeweils mit einer invertierten Version ergänzt.

Zweckmäßigerweise lassen sich auch unterschiedliche Ausstattungsvarianten hinsichtlich der Dichtung bei der Durchführung der Steuerleitungen (15) durch den Lagerschild darstellen. Als Varianten sind hierfür umspritzte oder montierte Gummitüllen oder einer Flüssigdichtung vorgesehen.

Weitere Kombinationsmöglichkeiten bestehen darin in einer Ausstattungsvariante die Leiterplatte (9) mittels einer Klemme, einer Stiftleiste (23) oder Press-Fit Pins, die mit einer Kontaktleiste verbunden sind oder mittels federnder Zungen, die auf Seitenkanten der Leiterplatte aufgeschoben sind, zu kontaktieren.

Die Baureihe ist dadurch gekennzeichnet, dass sie gut skalierbar ist und mit wenigen Bauteilvarianten eine große Anzahl an unterschiedlichen Kommutatormotoren bereitgestellt werden kann. Die Montage ist gekennzeichnet durch einfache Steckprozesse, die leicht zu automatisieren sind. Das Design ist robust und beide Wellenenden lassen sich für Abtriebs- oder Bremsfunktionen nutzen.

Ein Ausführungsbeispiel der Erfindung wird nachfolgend anhand der Zeichnung näher erläutert. Es zeigen:
Fig. 1 eine Bürstenseite einer Bürstentragplatte,
Fig. 2 eine Sensorseite der Bürstentragplatte,
Fig. 3 eine Explosionsdarstellung einiger Bauteile eines Kommutatormotors und
Fig. 4 eine Ansicht eines montierten Kommutatormotors.

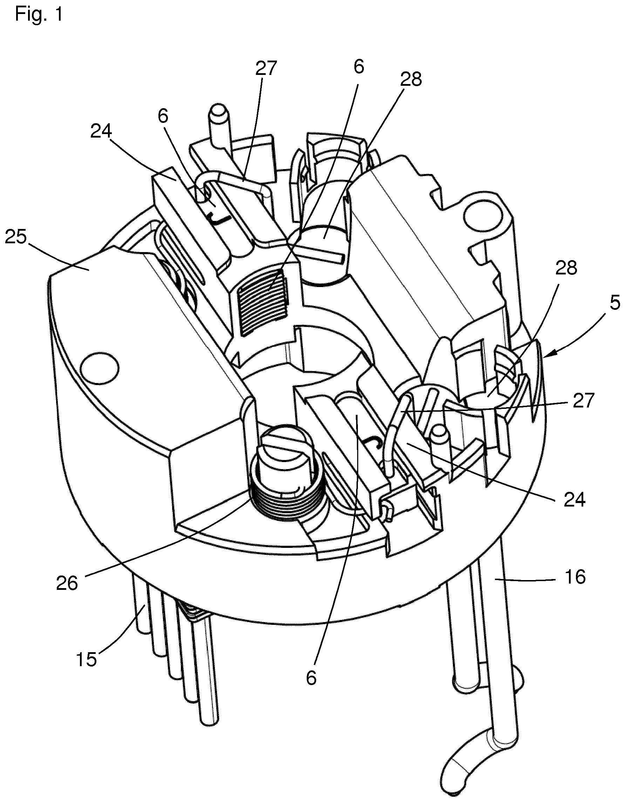

Fig. 1 zeigt eine Bürstenseite einer Bürstentragplatte 5, mit Bürsten 6, welche hier als Kohlebürsten ausgeführt sind, mit Bürstenköchern 24 zur Aufnahme und Führung der Bürsten 6, Bürstenfedern 26 zur Erzeugung einer Andruckkraft der Bürsten 6 auf einen Kommutator, Bürstenlitzen 27 zur Spannungsversorgung der Bürsten, Drosselaufnahmen 28 zur Aufnahme von Drosselspulen als Bestandteil einer Entstörschaltung, ein Sensorgehäuse 25 zur Aufnahme und Abschirmung einer Leiterplatte vor Verschmutzung und Wärmeeinwirkung, Versorgungsleitungen 16 und Steuerleitungen 15 zur Versorgung der Leiterplatte.

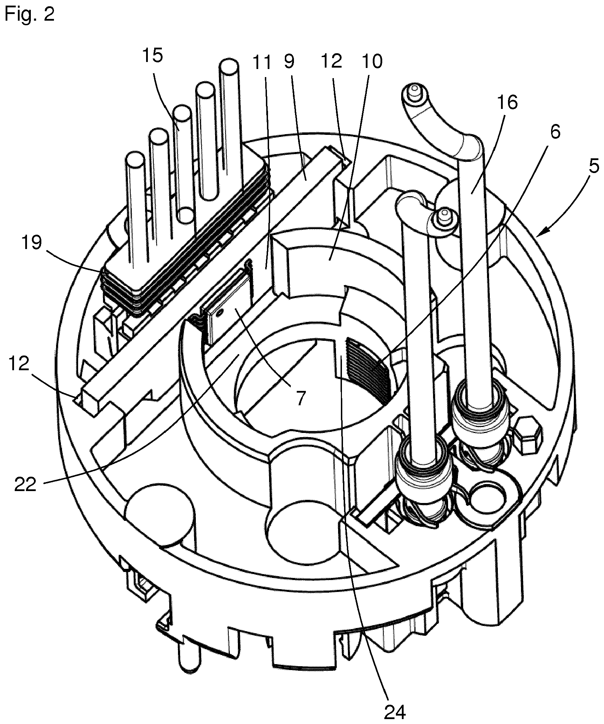

Fig. 2 zeigt eine Sensorseite der Bürstentragplatte 5, mit der Leiterplatte 9, einem Magnetfeldsensor 7, einer Dichtungstülle 19, einer Trennwand 22, welche axial die Bürstenseite von der Sensorseite trennt, den Versorgungsleitungen 16, den Steuerleitungen 15, einer Ringwand 10, welche mit der Bürstentragplatte 5 einstückig ist und eine Ausnehmung 11 aufweist, in welcher der Magnetfeldsensor 7 angeordnet ist. Die Ringwand 10 dient als weiterer Bestandteil des Sensorgehäuses 25. Weiter sind eine Bürste 6 und ein Bürstenköcher 24 dargestellt. Die Leiterplatte 9 ist in nutartigen Aufnahmen 12 montiert. Mit der Montage der Leiterplatte ist die Lage des Magnetfeldsensors eindeutig definiert.

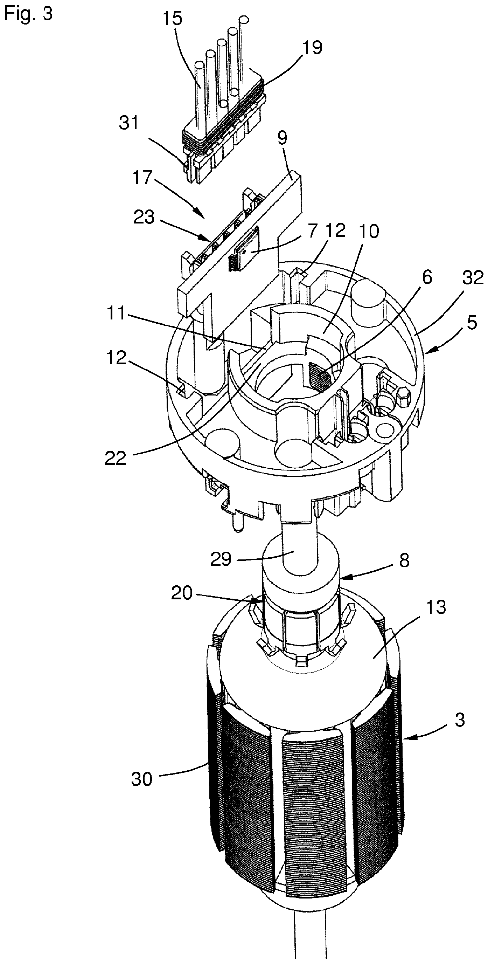

Fig. 3 zeigt eine Explosionsdarstellung einiger Bauteile eines Kommutatormotors, mit einem Rotor 3, der Bürstentragplatte 5, der Leiterplatte 9 und den Steuerleitungen 15. Der Rotor 3 weist eine Welle 29, ein Rotorblechpaket 30, einen Kommutator 20 eine Wicklung 13 und ein magnetisches Polrad 8 auf. Bei der Bürstentragplatte 5 ist deutlicher als in Fig. 2 die nutartige Aufnahme 12 für die Leiterplatte 9 zu erkennen. Die Leiterplatte 9 ist hier konstruktionsbedingt T-förmig ausgebildet. Auf einer ersten Seite der Leiterplatte 9 ist der Magnetfeldsensor 7 angeordnet und auf der gegenüberliegenden zweiten Seite ist der Stecker 17 mit einer Stiftleiste 23 angeordnet. Die Steckrichtung für den Stecker ist achsparallel. Die Steuerleitungen 15 sind mit einem Dichtungsmaterial umspritzt, wodurch die Gummitülle 19 gebildet ist. Die Steuerleitungen 15 enden in einer Kontaktleiste 31. Bei der Bürstentragplatte 5 sind weiter die Ringwand 10, mit der Ausnehmung 11, die Trennwand 22 und eine radiale Außenwand 32 dargestellt.

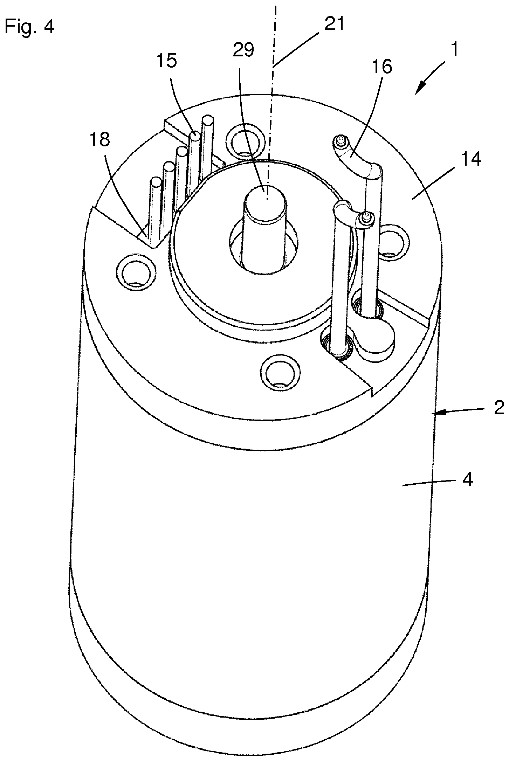

Fig. 4 zeigt eine Ansicht eines montierten Kommutatormotors 1, mit einem Permanentmagnetstator 4, der zugleich ein zylindrisches Außengehäuse bildet, einen Lagerschild 14, mit einer Durchgangsöffnung 18 für die Steuerleitungen 15, die Versorgungsleitungen 16, die Welle 29 und die Rotorachse 21.

**Bezugszeichenliste**

| | | | |
|---|---|---|---|
| 1 | Kommutatormotor | 29 | Welle |
| 2 | Gehäuse | 30 | Rotorblechpaket |
| 3 | Rotor | 31 | Kontaktleiste |
| 4 | Permanentmagnetstator | 32 | Außenwand |
| 5 | Bürstentragplatte | | |
| 6 | Bürste | | |
| 7 | Magnetfeldsensor | | |
| 8 | Polrad | | |
| 9 | Leiterplatte | | |
| 10 | Ringwand | | |
| 11 | Ausnehmung | | |
| 12 | Aufnahme | | |
| 13 | Wicklung | | |
| 14 | Lagerschild | | |
| 15 | Steuerleitung | | |
| 16 | Versorgungsleitung | | |
| 17 | Stecker | | |
| 18 | Durchgangsöffnung | | |
| 19 | Dichtungstülle | | |
| 20 | Kommutator | | |
| 21 | Rotorachse | | |
| 22 | Trennwand | | |
| 23 | Stiftleiste | | |
| 24 | Bürstenköcher | | |
| 25 | Sensorgehäuse | | |
| 26 | Bürstenfeder | | |
| 27 | Bürstenlitze | | |
| 28 | Drosselaufnahme | | |

## Patentansprüche

1. Kommutatormotor (1) mit einem Gehäuse (2), einem eine Wicklung (13), einen Kommutator (20) und ein magnetisches Polrad (8) tragenden und um eine Rotorachse (21) drehbar gelagerten Rotor (3), einem Permanentmagnetstator (4), einer im Wesentlichen rechtwinklig zur Rotorachse (21) angeordneten Bürstentragplatte (5) mit Bürsten (6), welche mit dem Kommutator (20) in Kontakt stehen, einem innerhalb des Gehäuses (2) angeordneten Encoder, bestehend aus einem Magnetfeldsensor (7) und dem Polrad (8), wobei die Bürsten (6) axial auf einer ersten Seite einer Trennwand (22) der Bürstentragplatte (5) angeordnet sind und der Magnetfeldsensor (7) axial auf einer zweiten gegenüberliegenden Seite der Bürstentragplatte (5) auf einer Leiterplatte (9) angeordnet und befestigt ist, **dadurch gekennzeichnet, dass** die Bürstentragplatte (5) eine im Wesentlichen konzentrisch um eine Motorachse angeordnete Ringwand (10) aufweist, der Magnetfeldsensor (7) in einer Ausnehmung der Ringwand (10) und die Leiterplatte im Wesentlichen radial außerhalb der Ringwand (10) angeordnet ist.

2. Kommutatormotor nach Anspruch 1, **dadurch gekennzeichnet, dass** der Magnetfeldsensor (7) axial auf einer der Wicklung (13) abgewandten Seite der Bürstentragplatte (5) angeordnet ist.

3. Kommutatormotor nach Anspruch 1 oder 2, **dadurch gekennzeichnet, dass** die Leiterplatte (9) parallel zu der Rotorachse (21) ausgerichtet ist.

4. Kommutatormotor nach Anspruch 1 oder 3, **dadurch gekennzeichnet, dass** die Leiterplatte (9) in Aufnahmen (12) der Bürstentragplatte (5) achsparallel eingeschoben sind.

5. Kommutatormotor nach zumindest einem der Ansprüche 1 bis 4, **dadurch gekennzeichnet, dass** die Leiterplatte (9) einen Überspannungsschutz mit einem Nominalwert für die Spannungssignale von 3,7V, 5V, 12V, 24V, 40V oder 48V aufweist.

6. Kommutatormotor nach zumindest einem der Ansprüche 1 bis 5, **dadurch gekennzeichnet, dass** die Leiterplatte (9) einen Spannungsregler enthält, der die Ausgangssignale wahlweise mit einer Spannung von 3,7V, 5V, 12V, 24V, 40V oder 48V ausgibt.

7. Kommutatormotor nach zumindest einem der Ansprüche 1 bis 6, **dadurch gekennzeichnet, dass** die Leiterplatte (9) einen Temperatursensor enthält.

8. Kommutatormotor nach zumindest einem der Ansprüche 1 bis 7, **dadurch gekennzeichnet, dass** die Leiterplatte (9) einen Stecker (17) mit einer Klemme, einer Stiftleiste (23) oder Press-Fit Pins aufweist.

9. Kommutatormotor nach Anspruch 8, **dadurch gekennzeichnet, dass** Versorgungsleitungen (Zuleitungen) in einer Kontaktleiste enden, welche in die Stiftleiste (23) einrastet.

10. Kommutatormotor nach Anspruch 8 oder 9, **dadurch gekennzeichnet, dass** die Steckrichtung des Steckers (17) achsparallel ist.

11. Kommutatormotor nach Anspruch 9 oder 10, **dadurch gekennzeichnet, dass** der Lagerschild (14) eine Durchgangsöffnung (18) aufweist, welche eine Dichtungstülle (19) und die Versorgungsleitungen (16) und/oder die Steuerleitungen (15) aufnimmt.

12. Kommutatormotor nach Anspruch 11, **dadurch gekennzeichnet, dass** die Versorgungsleitungen (16) und/oder die Steuerleitungen (15) mit einer Dichtmasse umspritzt, umgossen oder auf andere Weise umhüllt sind, welche die Dichtungstülle (19) bildet.

13. Kommutatormotor nach zumindest einem der vorangehenden Ansprüche, **dadurch gekennzeichnet, dass** der Magnetfeldsensor (7) ein Hallsensor mit analogem oder digitalem Ausgang ist und das Polrad (8) zwischen einem Polpaar und dreißig Polpaare aufweist.

14. Kommutatormotor nach zumindest einem der vorangehenden Ansprüche, **dadurch gekennzeichnet, dass** der Magnetfeldsensor (7) ein Sensor auf Grundlage des magnetoresistiven Effekts, wie GMR-Sensor, AMR-Sensor, CMR-Sensor, TMR-Sensor oder ein Hallsensor-Array ist und das Polrad (8) zweipolig ist.

15. Kommutatormotor nach zumindest einem der Ansprüche 1 bis 14, **dadurch gekennzeichnet, dass** die Leiterplatte eine programmierbare Steuerung aufweist, wobei durch eine Programmierung eine Impulszahl pro Umdrehung, und/oder eine Drehrichtungserkennung und/oder eine Indexierung festlegbar ist.

16. Baureihe von Kommutatormotoren, wobei alle Kommutatormotoren der Baureihe wenigstens nach einem der vorangehenden Ansprüche ausgebildet sind, wobei jeder Kommutatormotor ein Gehäuse (2), einen eine Wicklung (13), einen Kommutator (20) und ein magnetisches Polrad (8) tragenden und um eine Rotorachse (21) drehbar gelagerten Rotor (3), einen Permanentmagnetstator (4), einer im Wesentlichen rechtwinklig zur Rotorachse (21) angeordneten Bürstentragplatte (5) mit Bürsten (6), welche mit dem Kommutator (20) in Kontakt stehen, eine innerhalb des Gehäuses (2) angeordneten Encoder, bestehend aus einem Magnetfeldsensor (7) und dem Polrad (8) aufweist, wobei die Bürsten (6) axial auf einer ersten Seite einer Trennwand (22) der Bürstentragplatte (5) angeordnet sind und der Magnetfeldsensor (7) axial auf einer zweiten gegenüberliegenden Seite der Bürstentragplatte (5) auf einer Leiterplatte (9) angeordnet und befestigt ist, und wobei sich die einzelnen Kommutatormotoren durch unterschiedliche Motordurchmesser und/oder Motorlängen und/oder Ausstattungsvarianten unterscheiden, welche Ausstattungsvarianten folgende Ausstattungsmerkmale aufweisen: die Bürstentragplatte (5), den Encoder, einer Leiterplatte und Steuerleitungen (15).

17. Baureihe nach Anspruch 16, **dadurch gekennzeichnet, dass** der Encoder in einer Ausstattungsvariante einen GMR-Sensor oder ein Hallsensor-Array und ein zweipoliges Polrad aufweist.

18. Baureihe nach Anspruch 16, **dadurch gekennzeichnet, dass** der Encoder in einer Ausstattungsvariante einen Hallsensor und ein mehrpoliges Polrad mit einer Polpaarzahl >= 2 und <= 30 aufweist.

19. Baureihe nach Anspruch 16, 17 oder 18, **dadurch gekennzeichnet, dass** der Encoder in einer Ausstattungsvariante mit oder ohne einer programmierbaren elektronischen Schaltung ausgerüstet ist.

20. Baureihe nach Anspruch 16, 17, 18 oder 19, **dadurch gekennzeichnet, dass** der Encoder in einer Ausstattungsvariante einen Magnetfeldsensor mit einem digitalen oder einem analogen Ausgang aufweist.

21. Baureihe nach Anspruch 16, 17, 18, 19 oder 20, **dadurch gekennzeichnet, dass** die Leiterplatte (9) in einer Ausstattungsvariante mit oder ohne einen integrierten Überspannungsschutz ausgerüstet ist.

22. Baureihe nach zumindest einem der Ansprüche 16 bis 21, **dadurch gekennzeichnet, dass** die Leiterplatte (9) in einer Ausstattungsvariante mit einem Spannungsregler ausgerüstet ist.

23. Baureihe nach zumindest einem der Ansprüche 16 bis 22, **dadurch gekennzeichnet, dass** die Leiterplatte (9) in einer Ausstattungsvariante mit einem Temperatursensor ausgerüstet ist.

24. Baureihe nach zumindest einem der Ansprüche 16 bis 23, **dadurch gekennzeichnet, dass** die Leiterplatte (9) in einer Ausstattungsvariante mit fünf oder acht Steuerleitungen (15) ausgerüstet ist, wobei jeweils zwei Leitungen für die Versorgung, für mehrere Kanäle und/oder für eine Indexierung, sowie für invertierte Kanäle und Indexierung verwendet werden.

25. Baureihe nach zumindest einem der Ansprüche 16 bis 24, **dadurch gekennzeichnet, dass** die Steuerleitungen (15) in einer Ausstattungsvariante mit einer umspritzten oder montierten Gummitülle oder einer Flüssigdichtung durch den Lagerschild geführt sind.

26. Baureihe nach zumindest einem der Ansprüche 16 bis 25, **dadurch gekennzeichnet, dass** die Leiterplatte (9) in einer Ausstattungsvariante mittels einer Klemme, einer Stiftleiste (23) oder Press-Fit Pins, welche mit einer Kontaktleiste oder mittels federnder Zungen, die auf Seitenkanten der Leiterplatte aufgeschoben sind, kontaktiert ist.

## Claims

1. Commutator motor (1), comprising a housing (2), a rotor (3) which carries a winding (13), a commutator (20) and a magnetic pole wheel (8) and which is mounted such as to be rotatable about a rotor axis (21), a permanent magnet stator (4), a brush support plate (5) which is arranged substantially at right angles to the rotor axis (21) and which has brushes (6) that are in contact with the commutator (20), and an encoder which is arranged inside the housing (2) and which consists of a magnetic field sensor (7) and the pole wheel (8), wherein the brushes (6) are arranged axially on a first side of a separating wall (22) of the brush support plate (5) and the magnetic field sensor (7) is arranged and fastened on a printed circuit board (9) axially on a second, opposite side of the brush support plate (5), **characterized in that** the brush support plate (5) has an annular wall (10) arranged substantially concentrically around a motor axis, the magnetic field sensor (7) is arranged in a cutout of the annular wall (10), and the printed circuit board is arranged substantially radially outside the annular wall (10).

2. Commutator motor according to claim 1, **characterized in that** the magnetic field sensor (7) is arranged axially on a side of the brush support plate (5) facing away from the winding (13).

3. Commutator motor according to claim 1 or 2, **characterized in that** the printed circuit board (9) is oriented parallel to the rotor axis (21).

4. Commutator motor according to claim 1 or 3, **characterized in that** the printed circuit board (9) are pushed in an axis-parallel manner into receptacles (12) of the brush support plate (5).

5. Commutator motor according to at least one of claims 1 to 4, **characterized in that** the printed circuit board (9) has a surge protector with a nominal value for the voltage signals of 3.7 V, 5 V, 12 V, 24 V, 40 V or 48 V.

6. Commutator motor according to at least one of claims 1 to 5, **characterized in that** the printed circuit board (9) contains a voltage regulator which outputs the output signals selectively with a voltage of 3.7 V, 5 V, 12 V, 24 V, 40 V or 48 V.

7. Commutator motor according to at least one of claims 1 to 6, **characterized in that** the printed circuit board (9) contains a temperature sensor.

8. Commutator motor according to at least one of claims 1 to 7, **characterized in that** the printed circuit board (9) has a connector (17) comprising a terminal, a pin strip (23) or press-fit pins.

9. Commutator motor according to claim 8, **characterized in that** supply lines (feed lines) end in a contact strip, which engages in the pin strip (23).

10. Commutator motor according to claim 8 or 9, **characterized in that** the plug-in direction of the connector (17) is axis-parallel.

11. Commutator motor according to claim 9 or 10, **characterized in that** the end shield (14) has a through-opening (18) which receives a sealing grommet (19) and the supply lines (16) and/or the control lines (15).

12. Commutator motor according to claim 11, **characterized in that** the supply lines (16) and/or the control lines (15) are encapsulated, potted or otherwise encased with a sealing compound, which forms the sealing grommet (19).

13. Commutator motor according to at least one of the preceding claims, **characterized in that** the magnetic field sensor (7) is a Hall sensor with an analogue or digital output, and the pole wheel (8) has between one pole pair and thirty pole pairs.

14. Commutator motor according to at least one of the preceding claims, **characterized in that** the magnetic field sensor (7) is a sensor based on the magnetoresistive effect, such as a GMR sensor, an AMR sensor, a CMR sensor, a TMR sensor or a Hall sensor array, and the pole wheel (8) has two poles.

15. Commutator motor according to at least one of claims 1 to 14, **characterized in that** the printed circuit board has a programmable controller, wherein a number of pulses per revolution and/or a detection of a direction of rotation and/or an indexing can be defined by programming.

16. Range of commutator motors, wherein all the commutator motors in the range are designed according to at least one of the preceding claims, wherein each commutator motor comprises a housing (2), a rotor (3) which carries a winding (13), a commutator (20) and a magnetic pole wheel (8) and which is mounted such as to be rotatable about a rotor axis (21), a permanent magnet stator (4), a brush support plate (5) which is arranged substantially at right angles to the rotor axis (21) and which has brushes (6) that are in contact with the commutator (20), and an encoder which is arranged inside the housing (2) and which consists of a magnetic field sensor (7) and the pole wheel (8), wherein the brushes (6) are arranged axially on a first side of a separating wall (22) of the brush support plate (5) and the magnetic field sensor (7) is arranged and fastened on a printed circuit board (9) axially on a second, opposite side of the brush support plate (5), and wherein the individual commutator motors differ by different motor diameters and/or motor lengths and/or equipment variants, the equipment variants comprising the following equipment features: the brush support plate (5), the encoder, a printed circuit board, and control lines (15).

17. Range according to claim 16, **characterized in that** the encoder in one equipment variant comprises a GMR sensor or a Hall sensor array and a two-pole pole wheel.

18. Range according to claim 16, **characterized in that** the encoder in one equipment variant comprises a Hall sensor and a multi-pole pole wheel with a number of pole pairs >= 2 and <= 30.

19. Range according to claim 16, 17 or 18, **characterized in that** the encoder in one equipment variant is equipped with or without a programmable electronic circuit.

20. Range according to claim 16, 17, 18 or 19, **characterized in that** the encoder in one equipment variant comprises a magnetic field sensor with a digital or analogue output.

21. Range according to claim 16, 17, 18, 19 or 20, **characterized in that** the printed circuit board (9) in one equipment variant is equipped with or without an integrated surge protector.

22. Range according to at least one of claims 16 to 21, **characterized in that** the printed circuit board (9) in one equipment variant is equipped with a voltage regulator.

23. Range according to at least one of claims 16 to 22, **characterized in that** the printed circuit board (9) in one equipment variant is equipped with a temperature sensor.

24. Range according to at least one of claims 16 to 23, **characterized in that** the printed circuit board (9) in one equipment variant is equipped with five or eight control lines (15), wherein in each case two lines are used for the power supply, for multiple channels and/or for indexing, as well as for inverted channels and indexing.

25. Range according to at least one of claims 16 to 24, **characterized in that** the control lines (15) in one equipment variant are routed through the end shield using a rubber grommet moulded or mounted thereon or a liquid seal.

26. Range according to at least one of claims 16 to 25, **characterized in that** the printed circuit board (9) in one equipment variant is contacted by means of a terminal, a pin strip (23) or press-fit pins, which with a contact strip or by means of flexible tongues which are pushed onto side edges of the printed circuit board.

## Revendications

1. Moteur à collecteur (1) avec un boîtier (2), un rotor (3) portant un enroulement (13), un collecteur (20) et une roue polaire magnétique (8) et monté rotatif autour d'un axe de rotor (21), un stator à aimant permanent (4), une plaque porte-balais (5) disposée sensiblement perpendiculairement à l'axe de rotor (21) avec des balais (6) qui sont en contact avec le collecteur (20), un codeur disposé à l'intérieur du boîtier (2), consistant en un capteur de champ magnétique (7) et la roue polaire (8), où les balais (6) sont disposés axialement sur un premier côté d'une paroi de séparation (22) de la plaque porte-balais (5) et le capteur de champ magnétique (7) est disposé et fixé axialement sur un deuxième côté opposé de la plaque porte-balais (5) sur une carte de circuit imprimé (9), **caractérisé en ce que** la plaque porte-balais (5) présente une paroi annulaire (10) disposée de manière sensiblement concentrique autour d'un axe de moteur, le capteur de champ magnétique (7) est disposé dans un évidement de la paroi annulaire (10) et la carte de circuit imprimé est disposée sensiblement radialement à l'extérieur de la paroi annulaire (10).

2. Moteur à collecteur selon la revendication 1, **caractérisé en ce que** le capteur de champ magnétique (7) est disposé axialement sur un côté de la plaque porte-balais (5) opposé à l'enroulement (13).

3. Moteur à collecteur selon la revendication 1 ou 2, **caractérisé en ce que** la carte de circuit imprimé (9) est orientée parallèlement à l'axe de rotor (21).

4. Moteur à collecteur selon la revendication 1 ou 3, **caractérisé en ce que** la plaque de circuit imprimé (9) est insérée parallèlement à l'axe dans des logements (12) de la plaque porte-balais (5).

5. Moteur à collecteur selon au moins l'une des revendications 1 à 4, **caractérisé en ce que** la plaque de circuit imprimé (9) présente une protection contre les surtensions d'une valeur nominale pour les signaux de tension de 3,7 V, 5 V, 12 V, 24 V, 40 V ou 48 V.

6. Moteur à collecteur selon au moins l'une des revendications 1 à 5, **caractérisé en ce que** la carte de circuit imprimé (9) contient un régulateur de tension qui délivre les signaux de sortie au choix avec une tension de 3,7 V, 5 V, 12 V, 24 V, 40 V ou 48 V.

7. Moteur à collecteur selon au moins l'une des revendications 1 à 6, **caractérisé en ce que** la carte de circuit imprimé (9) contient un capteur de température.

8. Moteur à collecteur selon au moins l'une des revendications 1 à 7, **caractérisé en ce que** la carte de circuit imprimé (9) présente une fiche (17) avec une borne, une barrette à broches (23) ou des broches à emboîtement.

9. Moteur à collecteur selon la revendication 8, **caractérisé en ce que** les lignes d'alimentation (lignes d'apport) se terminent dans une barrette de contact qui s'engage dans la barrette à broches (23).

10. Moteur à collecteur selon la revendication 8 ou 9, **caractérisé en ce que** le sens d'insertion de la fiche (17) est parallèle à l'axe.

11. Moteur à collecteur selon la revendication 9 ou 10, **caractérisé en ce que** la plaque d'appui (14) présente une ouverture traversante (18) qui reçoit un passe-fil d'étanchéité (19) et les lignes d'alimentation (16) et/ou les lignes de commande (15).

12. Moteur à collecteur selon la revendication 11, **caractérisé en ce que** les lignes d'alimentation (16) et/ou les lignes de commande (15) sont encapsulées, enrobées ou revêtues d'une autre manière avec une masse d'étanchéité, qui forme le passe-fil d'étanchéité (19).

13. Moteur à collecteur selon au moins l'une des revendications précédentes, **caractérisé en ce que** le capteur de champ magnétique (7) est un capteur à effet Hall à sortie analogique ou numérique et la roue polaire (8) présente entre une paire de pôles et trente paires de pôles.

14. Moteur à collecteur selon au moins l'une des revendications précédentes, **caractérisé en ce que** le capteur de champ magnétique (7) est un capteur basé sur l'effet magnétorésistif, comme un capteur GMR, un capteur AMR, un capteur CMR, un capteur TMR ou un réseau de capteurs à effet Hall et la roue polaire (8) est à deux pôles.

15. Moteur à collecteur selon au moins l'une des revendications 1 à 14, **caractérisé en ce que** la carte de circuit imprimé présente une commande programmable, de sorte qu'un nombre d'impulsions par tour et/ou une détection de sens de rotation et/ou une indexation peuvent être établis par une programmation.

16. Série de moteurs à collecteur, où tous les moteurs à collecteur de la série sont conçus au moins selon l'une des revendications précédentes, où chaque moteur à collecteur présente un boîtier (2), un rotor (3) portant un enroulement (13), un collecteur (20) et une roue polaire magnétique (8) et monté rotatif autour d'un axe de rotor (21), un stator à aimant permanent (4), une plaque porte-balais (5) disposée sensiblement perpendiculairement à l'axe de rotor (21) avec des balais (6) qui sont en contact avec le collecteur (20), un codeur disposé à l'intérieur du boîtier (2), consistant en un capteur de champ magnétique (7) et la roue polaire (8), où les balais (6) sont disposés axialement sur un premier côté d'une paroi de séparation (22) de la plaque porte-balais (5) et le capteur de champ magnétique (7) est disposé et fixé axialement sur un deuxième côté opposé de la plaque porte-balais (5) sur une carte de circuit imprimé (9), et où les moteurs à collecteur individuels diffèrent par des diamètres de moteur et/ou des longueurs de moteur et/ou des variantes d'équipement différents, lesquelles variantes d'équipement présentent les caractéristiques d'équipement suivantes: la plaque porte-balais (5), le codeur, une carte de circuit imprimé et des lignes de commande (15).

17. Série selon la revendication 16, **caractérisée en ce que** le codeur présente dans une variante d'équipement un capteur GMR ou un réseau de capteurs à effet Hall et une roue polaire à deux pôles.

18. Série selon la revendication 16, **caractérisée en ce que** le codeur présente dans une variante d'équipement un capteur à effet Hall et une roue polaire multipolaire avec un nombre de paires de pôles > = 2 et <= 30.

19. Série selon la revendication 16, 17 ou 18, **caractérisée en ce que** le codeur est équipé dans une variante d'équipement avec ou sans circuit électronique programmable.

20. Série selon la revendication 16, 17, 18 ou 19, **caractérisée en ce que** le codeur présente dans une variante d'équipement un capteur de champ magnétique avec une sortie numérique ou analogique.

21. Série selon la revendication 16, 17, 18, 19 ou 20, **caractérisée en ce que** la carte de circuit imprimé (9) est équipée dans une variante d'équipement avec ou sans protection intégrée contre les surtensions.

22. Série selon au moins l'une des revendications 16 à 21, **caractérisée en ce que** la carte de circuit imprimé (9) est équipée dans une variante d'équipement d'un régulateur de tension.

23. Série selon au moins l'une des revendications 16 à 22, **caractérisée en ce que** la carte de circuit imprimé (9) est équipée dans une variante d'équipement d'un capteur de température.

24. Série selon au moins l'une des revendications 16 à 23, **caractérisée en ce que** la carte de circuit imprimé (9) est équipée dans une variante d'équipement de cinq ou huit lignes de commande (15), où dans chaque cas deux lignes sont utilisées pour l'alimentation, pour plusieurs canaux et/ou pour une indexation, ainsi que pour des canaux et une indexation inversés.

25. Série selon au moins l'une des revendications 16 à 24, **caractérisée en ce que** les lignes de commande (15) sont guidées dans une variante d'équipement à travers la plaque d'appui avec un passe-fil en caoutchouc encapsulé ou monté ou un joint liquide.

26. Série selon au moins l'une des revendications 16 à 25, **caractérisé en ce que** la carte de circuit imprimé (9) dans une variante d'équipement est mise en contact au moyen d'une borne, d'une barrette à broches (23) ou de broches à emboîtement, qui sont reliées à une barrette de contact ou au moyen de languettes élastiques qui sont enfilées sur des bords latéraux de la carte de circuit imprimé.
